# EUROPEAN PATENT SPECIFICATION

(11) **EP 1 565 681 B1**
(45) Date of publication and mention of the grant of the patent: **31.01.2007**
(21) Application number: 03781382.1
(22) Date of filing: 27.10.2003
(51) Int. Cl.: F16L 9/133, F16L 11/04, B32B 27/34, B32B 27/08

(54) **TUBULAR POLYMERIC COMPOSITES FOR TUBING AND HOSE CONSTRUCTIONS**
RÖHRENFÖRMIGE POLYMERZUSAMMENSETZUNGEN FÜR RÖHREN UND SCHLAUCHKONSTRUKTIONEN
COMPOSITES POLYMERES TUBULAIRES POUR CONSTRUCTIONS DE TUBES ET DE TUYAUX

(30) Priority: 26.11.2002 US 429512 P
(43) Date of publication of application: 24.08.2005
(73) Proprietor: PARKER-HANNIFIN CORPORATION, Cleveland, Ohio 44124-4141 (US)
(72) Inventor: POWELL, Steven M,, Chardon, OH 44024 (US); MONER, Ronald A,, MI 49009 Kalamazoo (US); JOHNSTON, James L,, N. Canton, OH 44721 (US); GRECO, John R,, Canton, OH 44708 (US); MARTINO, Nick A,, Canton, OH 44708 (US)
(74) Representative: Pilch, Adam John Michael
(86) International application number: PCT/US2003/033804
(87) International publication number: WO 2004/048086

(56) References cited:
- WO-A-95/27866
- US-A- 5 313 987
- US-A- 5 425 817
- US-A- 5 524 673
- US-A- 6 071 579

## Description

### BACKGROUND OF THE INVENTION

The present invention relates broadly to multi-layer tubular polymeric composites and to articles such as hoses and tubing, which may be straight or coiled, constructed thereof, and more particularly to such composites and to such articles as airbrake tubing having an innermost and an outermost layer of a nylon or other chemically-resistant or other polymeric material, each of which layers is bonded, either directly or indirectly, such as via a tie layer, to an interlayer, which may be the same interlayer in a three layer construction or two different interlayers in a five or more layer construction, of a more general purpose thermoplastic resin which may have a durometer of about 80 Shore A or higher, and which resin may be a copolyester or a polyurethane elastomer.

Tractor/trailer rigs and other heavy-duty vehicles are conventionally are equipped with pneumatically-operated emergency brakes in addition to usual service airbrakes. In basic operation, and as is further described in U.S. Pat. No. 5,232,645 and U.K. Pat. Appln. GB 2,239,503, pressurized air is supplied from the truck unit to the trailer unit, which may be articulated, for the actuation of the emergency and service brake systems of the trailer. Within the emergency brake system, the braking mechanism normally is released under the condition of a constant air pressure supply. The service brake system, however, is manually actuated with pressurized air being supplied to the breaking mechanism upon the Appln. of the brake pedals by the operator.

Pressurized air from the truck to the trailer unit, or between trailer units in tandem rigs, may be supplied via flexible tubing or hose, with separate, dedicated lines being provided for the independent operation of the emergency and service brake systems. Performance requirements for airbrake tubing generally are subject to various governmental or industry regulations promulgated to ensure the safe operation of the vehicle. In this regard, airbrake tubing conventionally is constructed as having tubular core which optionally may be surrounded, in certain tubing types, by one or more layers of a braided or other wound reinforcement. The core tube may be a thermoplastic material such as a polyamide, polyolefin, polyvinyl chloride, or polyurethane, or a synthetic rubber material such as Buna N or neoprene, with the optional reinforcement preferably being a nylon, polyester, or aramid filament or yam. For increased abrasion resistance, the core tube and, as the case may be, reinforcement typically are covered with an outer jacket which may be formed of the same or different material as the core tube, but preferably is formed of more abrasion-resistance polymeric material which may be a polyamide, polyolefin, polyvinyl chloride, or polyurethane. Representative airbrake and other tubing constructions, and coils and bundles formed of such tubing, are described in U.S. Pat. Nos. 6,576,312; 6,098,666; 6,071,579; 6,066,377; 5,392,541; 5,232,645; 4,653,541; 4,009,734; 3,977,440; and RE38,087, in U.S. Pat. Appln. Publ. 2003/0145896, and in U.K. Pat. Appln. 2,239,503. Commercial airbrake tubing and coils are manufactured and sold by the Parflex Division of Parker-Hannifin Corp., Ravenna, Ohio.

Other multi-layer tubing constructions, such as used for fuel line applications, incorporate a bonding or tie layer between an inner fluoropolymer layer or liner and a second layer of a stronger, tougher, and, typically, less-expensive material, such as a nylon, polyamide, or polyurethane, which is used as a reinforcement or cover for the liner. The tie layer, which may be formed as a co- or tri-extrusion with the liner and second layers, is formulated to be compatible chemically with both the fluoropolymer material of the liner and the material of the second layer such that a thermal fusion bond may b e achieved between the liner and tie layer and the tie layer and second layer to thereby consolidate the tubing into an integral structure. The use of such tie layers dictates the selection of specific materials for the liner and second layer so as to be compatible with the material of the tie layer, or vice versa, and is believed limited to the use of melt processible fluoropolymers such as polyvinylidene fluoride (PVDF) or ethylene tetraflurorethylene (ETFE).

Multi-layer tubing constructions in general are shown in commonly-assigned, co-pending U.S. Pat. Appln. Serial No. 10/108,715, filed March 26, 2002, and entitled, "Tubular Polymeric Composites For Tubing and Hose Constructions. Other constructions are shown in U.S. Pat. Nos. 6,066,377; 6,041,826; 6,039,085; 6,012,496; 5,996,642; 5,937,911; 5,891,373; 5,884,672; 5,884,671; 5,865,218; 5,743,304; 5,716,684; 5,678,611; 5,570,711; 5,566,720; 5,524,673; 5,507,320; 5,500,263; 5,480,271; 5,469,892; 5,460,771; 5,419,374, 5,383,087; 5,284,184; 5,219,003; 5,167,259; 5,167,259; 5,112,692; 5,112,692; 5,093,166; 5,076,329; 5,076,329; 5,038,833; 5,038,833; 4,706,713; 4,627,844; and 3,561,493, in German Pat. Publ. Nos. DE 4001126; 3942354; and 3921723; and 3821723, in Japanese Pat. Publ. Nos. JP 61171982; 4224939; and 140585, in Europe Pat. Publ. Nos. EP 1002980, 992518, and 551094, in International (PCT) Publ. Nos. WO 99/41538; 99/41073; 97/44186; and 93/21466, and in U.K. Pat. Publ. No. GB 2204376.

WO 95/27866 discloses a multi-layer tube including an outer layer composed of an extrudable melt-processible thermoplastic; a thin intermediate bonding layer bonded to the outer layer, composed of an extrudable melt-processible thermoplastic capable of sufficiently permanent laminar adhesion to the outer layer; and an interior layer (14) composed of an extrudable melt-processable thermoplastic which is capable of sufficiently permanent laminar adhesion to the intermediate bonding layer.

US-A-5 313 987 discloses a multilayer plastic pipe consisting of at least one outer layer based on polyamide and at least one layer of a linear, crystalline polyester modified with isocyanates.

US-A-6 071 579 discloses a laminated air brake tubing including inner and outer nylon layers with an intermediate fiber reinforcing layer. The tubing further includes one and preferably two layers of high density polyethylene positioned adjacent either of the nylon layers with a protective layer separating the fiber reinforcing layer from the high density polyethylene layer. The protective layer is preferably a thin layer of nylon or nylon alloy. The high density polyethylene layer may include compatibilizing agents preventing delamination.

It is believed that alternative multi-layer tubular polymeric composites would be useful for airbrake tubing applications, and in a variety of other fluid transfer and motion control applications. In this regard, in severe or even normal service environments, such as in mobile or industrial pneumatic or hydraulic applications, hoses and tubing of the type herein involved may be exposed to a variety of environmental factors and mechanical stresses that cannot always be predicted. It is anticipated, therefore, that tubing and hose constructions which offer improved performance, but which are economical would be well-received by numerous industries.

### STATEMENT OF THE INVENTION

According to the invention there is provided a tubular polymeric composite member comprising an innermost layer comprising a first thermoplastic polymeric material; an outermost layer comprising a second thermoplastic polymeric material the same as or different from the first thermoplastic material; and at least one interlayer between the innermost and the outermost layer, wherein each of the innermost and outermost layers is bonded directly to one of the interlayers, and wherein each of the first and the second thermoplastic polymeric material is selected, independently, from the group consisting of polyamides and copolymers and blends thereof, the member being characterized in that the interlayer comprises a third thermoplastic polymeric material different from the first and the second thermoplastic material and selected from the group consisting of: (i) polyurethanes, polyurethane copolymers, and blends thereof; and (ii) polyesters, copolyesters, and copolymers and blends thereof, and each of the innermost layer, outermost layer, and interlayer having a thickness, the thickness of the interlayer being thicker than the thicknesses of the innermost and outermost layers.

Embodiments of the invention provide polymeric composites and articles such as tubing, which may be straight or coiled, and hoses constructed thereof. More particularly, a multi-layer or tubular polymeric composite may be provided, which may be formed by extrusion, co-extrusion, or molding. In being formed of an interlayer of a thermoplastic resin, such as a polyester or copolyester, or a polyurethane, or of a composite of a thermoplastic resin and fiber filler, which layer, in certain constructions, may be bonded directly, i.e., without the use of an adhesive or tie layer, between inner and outer layers of another thermoplastic resin material, such as a nylon or other polyamide, which may be more chemically or environmentally resistant, the composite embodying the invention may be particularly adapted for use as tubing for vehicular airbrake systems, and/or as a core tube in a reinforced hose construction, as well as in other applications requiring chemical resistance and/or compliance with industry or governmental standards. Typically, the more chemically or environmentally-resistant layers are provided as an innermost and/or outermost layer of the composite structure.

In a representative embodiment, the composite structure of the invention may be formed as having innermost and outermost layers of nylon, each of which layers is bonded directly or indirectly to an interlayer, which may be the same interlayer in a three layer construction or two different interlayers in a five or more layer construction, of a polyester, copolyester, or polyurethane elastomer, which elastomer may be filled with one or more fiber materials which may be glass, carbon, polymeric, ceramic, metallic, or the like. The structure so formed may be used as a core tube over which one or more layers of a fibrous reinforcement layer are braided or wound to provide resistance to internal or external pressures. Also, such structure may be used, either as coiled or uncoiled, and as unreinforced or as having one or more internal reinforcement layers, as tubing for airbrake systems.

The present invention, accordingly, comprises the structures and article constructed thereof possessing the combination of elements which are exemplified in the detailed disclosure to follow. Advantages of the present invention include a tubular composite structure which may be used alone as tubing or as core tube for hose, and which provides flexibility, formability, creep resistance, and push-in or other fitting retention which is improved over many existing multi-layer tubing constructions. Additional advantages include a tubing construction which is economical to manufacture, and which meets applicable DOT and SAE standards for airbrake tubing and coils. These and other advantages should be apparent to those skilled in the art based upon the disclosure contained herein.

### BRIEF DESCRIPTION OF THE DRAWINGS

For a fuller understanding of the nature and objects of the invention, reference should be had to the following detailed description taken in connection with the accompanying drawings wherein:
Fig. 1 is a side elevational, cut-away view of a representative three layer tubular polymeric composite member according to the present invention;
Fig. 2 is a side elevational, cut-away view of a representative five layer tubular polymeric composite member according to the present invention;
Fig. 3 is a side elevational, cut-away view of a representative seven layer tubular polymeric composite member according to the present invention;
Fig. 4 is a radial cross-sectional view of a representative alternative three layer tubular polymeric composite member according to the present invention; and
Fig. 5 is a radial cross-sectional view of a representative alternative five layer tubular polymeric composite member according to the present invention.

The drawings will be described further in connection with the following Detailed Description of the Invention.

### DETAILED DESCRIPTION OF THE INVENTION

Certain terminology may be employed in the description to follow for convenience rather than for any limiting purpose. For example, the terms "forward," "rearward," "right," "left," "upper," and "lower" designate directions in the drawings to which reference is made, with the terms "inward," "interior," "inner," or "inboard" and "outward," "exterior," "outer," or "outboard" referring, respectively, to directions toward and away from the center of the referenced element, and the terms "radial" or "horizontal" and "axial" or "vertical" referring, respectively, to directions, axes, planes perpendicular and parallel to the central longitudinal axis of the referenced element. Terminology of similar import other than the words specifically mentioned above likewise is to be considered as being used for purposes of convenience rather than in any limiting sense.

In the figures, elements having an alphanumeric designation may be referenced herein collectively or in the alternative, as will be apparent from context, by the numeric portion of the designation only. Further, the constituent parts of various elements in the figures may be designated with separate reference numerals which shall be understood to refer to that constituent part of the element and not the element a saw hole. General references, a long with references to spaces, surfaces, dimensions, and extents, may be designated with arrows.

For the illustrative purposes of the discourse to follow, the precepts of the multilayer tubular polymeric composite or laminate of the invention herein involved are described in connection with its utilization as flexible tubing, which may be straight or coiled, such as for vehicular airbrake applications. It will be appreciated, however, that aspects of the present invention may find use in other tubing applications, such as in multiple tube bundles or as a core tube or other member within a flexible pressure or vacuum hose construction such as for hydraulic or pneumatic power, signaling, control, or general fluid transfer applications. Use within those such other applications therefore should be considered to be expressly within the scope of the present invention.

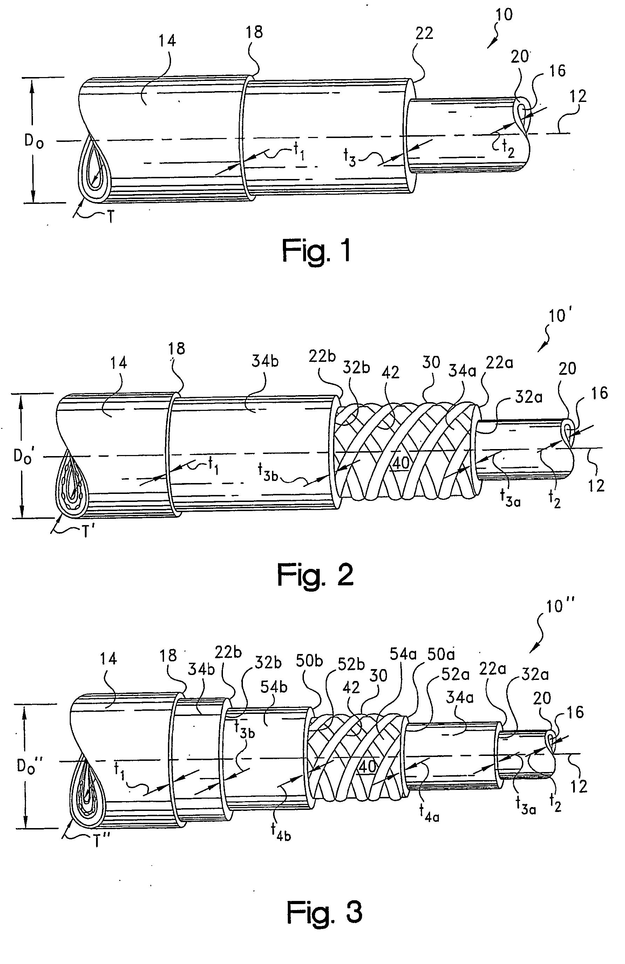

Referring then to the figures wherein corresponding reference characters are used to designate corresponding elements throughout the several views with equivalent elements being referenced with prime or sequential alphanumeric designations, a representative three layer tubular polymeric composite member in accordance with the present invention is shown generally in perspective cut-away at 10 in Fig. 1. In basic construction, member 10, which may be straight or coiled, is configured as a length of flexible tubing which extends lengthwise a long a central longitudinal axis, 12. In the embodiment shown, member 10 has a circumferential outer surface, 14, and a circumferential inner surface, 16, and is formed of as a laminate of a tubular outermost layer, 18, a tubular innermost layer, 20, which is concentric with the outermost layer 18, and at least one tubular interlayer, 22, which is concentric with and, in the construction 10, integrally adjoins the outermost and innermost layers 18 and 20.

Although the outer and inner surfaces 14 and 16 are shown to be, respectively, the outermost and innermost surfaces of the article depicted in the figure, it will be appreciated that in a hose construction, one or more reinforcement or additional resin layers, or a cover or jacket, may be knitted, braided, woven, wound, or wrapped in the case of a fiber, wire, metal foil, tape, film, or the like, or, alternatively, extruded, molded, or coated such as in the case of an additional resin layer resin layer, on or about, or otherwise as surrounding the outer surface 14, or as within the inner surface 16. The materials forming the reinforcement, cover, or additional resin layers may be loaded with metals, carbon black, pigments, dyes, reflectants or another fillers in particulate, flake, fiber, or other form so as to render the member 10 electrically-conductive for applications requiring electrical conductivity or static dissipation, and/or, depending upon the filler, for providing color coding or increased visibility. Separate electrically-conductive or reflective fiber or resin layers, wires, and other elements (not shown) also may be incorporated within, in, or on the multi-layer structure of member 10 such as to provide electrical conductivity, static dissipation, or increased visibility.

The outermost and innermost layers 18 and 20 each is formed of a thermoplastic material, which may be a homo or copolymer, or a blend thereof, i.e., a blend of one or more homopolymers, one or more copolymers, or one or more homopolymers and one or more copolymers. Such thermoplastic material may be filled or unfilled, and may be the same or different in the layers 18 and 20, but for many applications such as airbrake tubing, may be the same. As used herein, the term "thermoplastic material" is used interchangeably with "melt processible material," and is in contrast to non-melt processible materials such as thermosets or non-thermosetting materials which otherwise exhibit a melt viscosity that is sufficiently high so as to preclude flow and processing by conventional melt extrusion or molding operations, and therefore necessitating that the material be processed using sintering or solvent processing techniques. Such materials, which may be referred herein as "resins," typically will have a melting point of between about 110-230°C, and a thermal decomposition temperature, which defines the upper processing limit of the resin, of between about 150-260°C. As also used herein, "melting point" may be a transition from a form-stable crystalline or glassy solid phase to a softened or otherwise viscous phase which may be generally characterized as exhibiting intermolecular chain rotation and, as between layers, chain diffusion and/or other intermingling. For amorphous or other thermoplastic resins not having a clearly defined melting peak, the term melting point is used interchangeably with glass transition or softening point.

For airbrake tubing applications, a polyamide, and particularly a polyamide of the type commonly used in such applications, such as a plasticized or unplasticized nylon which may be Nylon 6, 6/66, 6/12, or, typically 11 or 12, may be preferred for the material or materials forming layers 18 and 20 as providing the desired degree of chemical resistance. As used herein, "chemical resistance" should be understood to mean the ability to resist swelling, crazing, stress cracking, corrosion, or otherwise to withstand attack from gasoline, diesel fuel, and other engine fluids or hydrocarbons, as well as organic solvents such as methanol, and inorganic solvents such as water or brine. The specific nylon or other polyamide may be chosen for reasons of cost and/or for service temperature, chemical compatibility with the fluid being handled, fluid, solvent, moisture, or environmental resistance, flexural modulus, hardness, or other physical property, and typically will have a melting point of between about 175-235°C and a thermal decomposition temperature of between about 195-280°C

The material forming each of the interlayers 22 is also a thermoplastic material, which again may be a homo or copolymer, or a blend thereof, i.e., a blend of one or more homopolymers, one or more copolymers, or one or more homopolymers and one or more copolymers, but may be different from the material or materials forming the layers 18 and 20. Such thermoplastic material, which again may be filled or unfilled, may be the same or different in each of the interlayers layers 18 and 20, but for many applications such as airbrake tubing, may be the same. The material or materials forming the interlayer 22 may be a resin or resins of a more general purpose variety than that or those forming the layers 18 and 20.

Suitable such more general purpose resin materials include polyesters and copolyesters, as well as polyurethanes, including those of such materials which may be classified as at least somewhat elastomeric. As used herein, the term "elastomeric" is ascribed its conventional meaning of exhibiting rubber-like properties of compliancy, resiliency or compression deflection, low compression set, flexibility, and an ability to recover after deformation, i.e., stress relaxation. Such materials may be relatively more flexible, i.e., having a lower flexural modulus, than the polyamide material or materials forming the layers 18 and 20, or otherwise may be selected for temperature performance, strength or other physical or mechanical properties, and/or compatibility with the material or materials of the layers 18 and 20, or for a convergence of one or more of the foregoing properties.

For Example, a hardness of between about 80 Shore A and 75 Shore D, and a flexural modulus of between about 10,000-100,000 psi may provide the desired convergence of flexibility and pressure resistance for a working or service pressure rating of at least about 150 psi (1 MPa). Particularly, a hardness, such as per ASTM D-2240, of between about 63-83 S hore D may be considered preferred, and between about 70-75 Shore D may be considered most preferred insofar as such hardness may provide optimal performance in meeting fitting hot pull tensile testing requirements, such as per SAE J1131 and/or J2494, and may also provide superior coil retention in the case of coiled tubing.

Indeed moreover, with interlayer 22 being formed of a material having a flexural modulus lower than the polyamide material or materials forming the layers 18 and 20, a multi-layer tubing construction may be envisioned which is more flexible than a single layer nylon construction, or than a multi-layer construction employing higher modulus materials such as high density polyethylene, while still meeting commercial or regulatory standards such as SAE Standard J844, "Nonmetallic Air Brake System Tubing," (June 1998), SAE Standard J2484, "Push-To-Connect Tube Fittings for Use in the Piping of Vehicular Air Brake," (May 2000), and SAE Standard J1131, "Performance Requirements for SAE J844 Nonmetallic Tubing and Fitting Assemblies Used in Automotive Air Brake Systems," (August 1998), and DOT FMVSS 106 (49 CFR § 571.106).

Suitable thermoplastic polyurethane (TPU) elastomers include polyester or polyester polyol-based materials, as well as those based on hydroxyl-terminated polycarbonates, polycaprolactams, polyolefins, polyacrylates, or on combinations thereof. Particularly materials compatible with the polyamide materials of the layers 18 and 20 may be considered preferred for airbrake tubing and coil constructions. By "compatible," it is meant that the TPU material of interlayer 22 is bondable directly to the material or materials of layers 18 and 20 to form an integral, composite or laminate structure of member 10 without the use of an intermediate adhesive, tie, or other layer. Preferably, such bond also is able to be effected without substantial preparation, priming, or other or other surface treatments so as to allow the member 10 to be more economically formed for commercial production in a minimum of processing operations by a continuous co-extrusion or other extrusion such as cross-head or sequential extrusion, in addition to molding or co-molding, or other processes such as coating, or a combination of extrusion, molding, and/or coating. The respective bonds formed therebetween the respective layers 18 and 22, and the layers 20 and 22 generally will depend upon the respective compositions thereof, but may consist of one or more components which may be chemical in nature, such as by covalent, ionic, or hydrogen, i.e., hydridic bridge, bonding or cross-linking reactions, electrostatic, van der Waals, or other attractive forces, or thermal fusion in nature such as by chain or other intermingling of melt material from the layers. With the application of pressure, such as die, hydrostatic, or mold pressure, followed by cooling to, for example, ambient temperature, an integral, cohesive bond or "weld" may be formed between the layers which generally may have a bond strength, such as a peel strength, of between about 15-60 pounds per linear inch (pli) (26-105 Newtons per linear centimeter (N/cm)). Indeed, it has been observed that in some cases the bond achieved between the materials of the layers 18 and 22, and of the layers 20 and 22, is such that the tensile strength thereof may exceed the yield strength of the base materials, and in that regard the bond between the layers can be classified as cohesive, i.e., inseparable.

Representative TPU materials are marketed under the name Estane® by Noveon, Inc., Cleveland, OH, and under the name Elastollan® by BASF Corp., Wyandotte, MI. Particularly preferred TPU materials are marketed under the designations X-1013, X-1014, and X-4490 by Noveon, Inc. As is further d escribed i n U.S. P at. Appln. Publ. 2003/0139509 and International (PCT) Publ. No. WO 03/057752, such materials, although being of a relatively high durometer within the preferred range of between about 63-83 Shore D, nonetheless are still extrudable using conventional techniques. In this regard, such materials are highly crystalline in having a hard segment content of at least about 20% by weight, but are modified to include a crystallization retarding component, such as one or more short chain or monomeric diols which are branched, substituted, or contain heteroatoms. Such component is provided in an amount sufficient to reduce crystal formation during extrusion and to delay crystallization onset until the composition reaches the die or other outlet of the extruder within which the composition may be reactively processed. Thus, by allowing the crystallization of the hard segment to proceed, but at a reduced rate, the desirable physical and chemical properties of the TPU, such as wear, heat, chemical, and solvent resistance, without causing undue solid buildup in the extruder. As used herein, "hard segment content" may be defined as equal to the total of the weight percent of the isocyanate component, any chain extenders, and the crystallization retarding component, divided by the total weight of the TPU composition, i.e., including the polyol component.

Suitable polyester materials include copolyester, elastomers which may be copolyether-esters, copolyester-esters, or otherwise a formed by the reaction of one or more diols and one or more diacids. As before, if formed of compatible materials, the interlayer 22 may be cross-linked or otherwise chemically or fusion bonded to each of the layers 18 and 20 at their interface to form an integral, tubular composite structure of member 10. Representative polyester materials are marketed under the name Arnitel® by DSM Engineering Plastics, Evansville, IN, and under the name Hytrel® by DuPont, Wilmington, DE.

To the extent not directly compatible with the polyamide material or materials of the layers 18 and 20, the polyester material of the layer 22 may be blended or otherwise modified, for example, with, typically, between about 5-25% by weight of a functionalized thermoplastic adhesive (TPA) or other resin. By "functionalized," the TPA base resin, which may be an ethylene vinyl acetate (EVA) or other copolymer, or a polyolefin homo- or copolymer, such as polyethylene, polypropylene, or ethylene/acrylate, or a blend of one or more of such polymers and copolymers, may be reacted or admixed with one or more reactive monomers so as to have functional group or sites which may cross-link or otherwise bond chemically with the material or materials of the layers 18 and 20. The TPA base resin typically will be acid-, anhydride-, or acrylate-modified, such as with maleic anhydride. With the layers 18, 20, and 22 again being extruded or otherwise formed, a chemical bond may be formed at the interfaces therebetween the layers 18 and 22, and the layers 20 and 22, and thereby again forming the integral, tubular composite structure of member 10. Representative functionalized TPA materials are marketed under the name Bynel® by DuPont, Wilmington, DE.

As depending upon the requirements of the particular application involved, one or more of the materials forming the layers 18, 20, and 22 may be compounded with one or more fillers, modifiers, or other additives. Such additives, which may b e the same or different in each of the layers and which may be in liquid, powder, particulate, flake, fiber, or other form, may include electrically-conductive fillers, microwave-attenuating fillers, thermally-conductive fillers, lubricants, wetting agents, stabilizers, antioxidants, pigments, dyes, colorants, colorings, or opacifying agents such as for coloring-coding of the tubing, luminescents, light reflectants, chain extending oils, tackifiers, blowing agents, foaming or anti-foaming agents, reinforcements such as glass, carbon, or textile fibers, and fire retardants such as halogenated compounds, metal oxides and salts, intercalated graphite particles, borates, siloxanes, phosphates, glass, hollow or solid glass or elastomeric microspheres, silica, silicates, mica, and the like. Typically, the additives are blended or otherwise admixed with the base material, and may comprise between about 0.1 % and 80% or more by total volume of the formulation. An especially preferred modifier for improved heat resistance is polybutylene terephthalate (PBT).

The wall thicknesses of each of the layers 18, 20, and 22 may be of any thickness, both absolute and relative to the thickness of the other layers in the member 10, but for many applications the outermost and innermost layers 18 and 20 may be relatively thin as having a thickness, referenced at "t₁" and "t₂," respectively, of between about 5-20 mils (0.13-0.51 mm), with interlayer 22 being relatively thick as having a thickness, referenced at "t₃", of between about 10-85 mils (0.25-2.20 mm). In this regard, for cost considerations in the manufacture of a flexible and economical tubing meeting organizational or regulatory standards such as, in the case of airbrake tubing, SAE J844, J1131, and J2494 (or comparable DIN standards), and DOT FMVSS106), the wall thicknesses t₁ and t₂ of the outermost and innermost layers 18 and 20, which may be formed of a relatively expensive nylon 11 or 12, may be maintained at the minimum necessary to provide the desired chemical or permeation resistance, such as to fuel and other engine fluids or hydrocarbons. However, for meeting the desired service pressure rating, as well as for other strength and flexibility considerations, the thickness t₃ of the interlayer 22, which essentially functions as a filler as formed of a less expensive polyester or polyurethane elastomer, may be between about 10-85 mils (0.25-2.20 mm) otherwise as between about 1-10 times thicker than the thicknesses t₁ or t₂. The thicknesses t₁ or t₂ may be the same or different, but for many applications, such as airbrake tubing, may be about the same. Overall, member 10 may be of any diametric and lengthwise extent, and may be generally round in cross-section as shown, but alternatively may be of an elliptical, polygonal, or other geometric cross-section. For a range of airbrake tubing applications, member 10 may have an overall w all thickness, referenced at "T," of between about 0.023-0.092 inch (0.58-2.33 mm), and an outer diameter, referenced at "Dₒ," of between about 0.128-0.755 inch (3.25-19.18 mm), or comparable metric sizes. Of course, it may be appreciated that member 10 alternatively may be provided as a 2-layer construction, such as by the deletion of one of the layers 18 or 20, with interlayer 22 thus being provided as either the innermost or outermost layer of the member.

Turning next to Fig. 2, a representative 5-layer tubing construction of member 10 is referenced generally at 10'. The construction and materials of the member 10' are similar to those of the member 10, with the exception that interlayer 22 is extruded or otherwise formed as two separate but adjacent layers, 22a and 22b, between which is interposed one or more reinforcement layers, 30. The wall thicknesses of each of the layers 18, 20, and 22 again may be of any thickness, both absolute and relative to the thickness of the other layers in the member 10', but for some applications the thicknesses t₃ₐ and t_{3b} of, respectively, the layers 22a and 22b may each be about one-half of the total desired thickness of the interlayer, and in general about one-half the thickness t₃ of the layer 22 in the 3-layer construction of member 10 (Fig. 1), so as to maintain the overall wall thickness T', which may be between about 0.023-0.092 inch (.58-2.33 mm) and outer diameter Dₒ', which may be between about 0.128-0.755 inch (3.25-19.18 mm), of the member 10' within desired specifications. Of course, the thicknesses t₃ₐ and t_{3b} each may be alternatively be about the same as, or even thicker than, the thickness t₃ such as for higher service pressure applications. The interlayers 22a-b may be formed of the same thermoplastic materials as was described in connection with layer 22, and may formed of the same or different of those materials.

Particularly as to the construction of member 10', the interlayers 22a and 22b each has an inner surface, 32a-b, respectively, and an outer surface, 34a-b, respectively, with the inner surface 32a of interlayer 22a being bonded directly to the innermost layer 20, and the outer surface 34b of the interlayer 22b being bonded directly to the outermost layer 20, and with the reinforcement layer 30 being interposed between the outer surface 34a of the interlayer 22a and the inner surface 32b of the interlayer 22b. In this regard, each of the one or more reinforcement layers 30 may be braided, woven, wound, such as spiral or helically, knitted, wrapped, or otherwise formed successively about, i.e., as surrounding, outer surface 34a of the interlayer 22a, with the interlayer 22b then being extruded or otherwise formed over the reinforcement layer or layers 30. Each of the reinforcement layers 30 may be formed, of one or more filaments, which may be monofilaments, continuous multi-filament, i.e., yarn, stranded, cord, roving, thread, tape, or ply, or short "staple" strands, of one or more fiber materials. The fiber material, which may be the same or different in each of the layers 30 which are provided, may be a natural or synthetic polymeric material such as a nylon, cotton, polyester, polyamide, aramid, polyolefin, polyvinyl alcohol (PVA), polyvinyl acetate, or polyphenylene bezobisoxazole (PBO), or blend, a steel, which may be stainless or galvanized, brass, zinc or zinc-plated, or other metal wire, or a blend thereof.

For airbrake tubing applications, and as is shown in Fig. 2, a single reinforcement layer 30 typically will be provided as braided of a nylon, polyester, or aramid filament or yarn, and as having a relatively open structure with interstices, one of which is referenced at 40, between the filaments, referenced at 42, of the braid. The interlayer 22b thereby may be fusion or otherwise bonded to the layer 22a through the interstices 40, with the reinforcement layer 30 itself being bonded to or between the layers 22a and 22b mechanically, such as by embedded in or encapsulated between the layers 22a-b, or by other bonding means such as fusion, chemical, or adhesive bonding, or a combination thereof or otherwise. Such other bonding means may be effected by solvating, tackifying, or plasticizing the surfaces of the layers 22a, 22b, and/or 30 with an appropriate solvent, such as a carboxylic or other organic acid, tackifier, or plasticizer such as an aqueous or other solution of an amine such as n-methyl pyrrolidone or a phenol such as meta-cresol or resorcinol, or with the use of a urethane, epoxy, vinyl chloride, vinyl acetate, methyl acrylic, or other adhesive having an affinity to the materials forming the layers 22a, 22b, and 30, or otherwise in the manner described, for example, in U.S. Pat. Nos. 3,654,967; 3,682,201; 3,773,089; 3,790,419; 3,861,973; 3,881,975; 3,905,398; 3,914,146; 3,982,982; 3,988,188; 4,007,070; 4,064,913; 4,343,333; 4,898,212; and in Japanese (Kokai) Publ. No. 10-169854 A2 and Canadian Pat. No. 973,074, and in co-pending application U.S.S.N 10/040,809, filed January 8, 2002, and in the references cited therein. As before, it may be appreciated that member 10' alternatively may be provided as a 4-layer construction, such as by the deletion of one of the layers 18 or 20, with one of the interlayers 22a-b thus being provided as either the innermost or outermost layer of the member.

Turning now to Fig. 3, a representative 7-layer tubing construction of member 10 is referenced generally at 10". The construction and materials of the member 10" are similar to those of the member 10' of Fig. 2, with the exception that two additional interior layers, referenced at 50a and 50b, are extruded or otherwise formed between the interlayers 22a ad 22b, with the reinforcement layer or layers 30 now being interposed between the interior layers 50a-b. As before, the wall thicknesses of each of the layers 18, 20, and 22, and of the interior layers 50a-b, referenced respectively at t₄ₐ and t_{4b}, again may be of any thickness, both absolute and relative to the thickness of the other layers in the member 10", but for some applications the thicknesses t₄ₐ and t_{4b} of the interior layers 50a and 50b may be about the same as the thicknesses t₁ and t₂ of the outermost and innermost layers 18 and 20 or otherwise as relatively thinner than the thicknesses t₃ₐ and t_{3b}, of the interlayers 22a-b. The interlayers 50a-b may be formed of the same thermoplastic materials as was described in connection with layers 18 and 20, and may formed of the same or different of those materials.

More particularly as to the construction of member 10", the interior layers 50a and 50b each has an inner surface, 52a-b, respectively, and an outer surface, 54a-b, respectively. The inner surface 52a of interior layer 50a is bonded directly to the outer surface 34a of the interlayer 22a, with the outer surface 54b of the interior layer 50b being bonded directly to the inner surface 32b of the interlayer 22b. The reinforcement layer 30 is interposed between the outer surface 54a of the interior layer 50a and the inner surface 52b of the interior layer 50b.

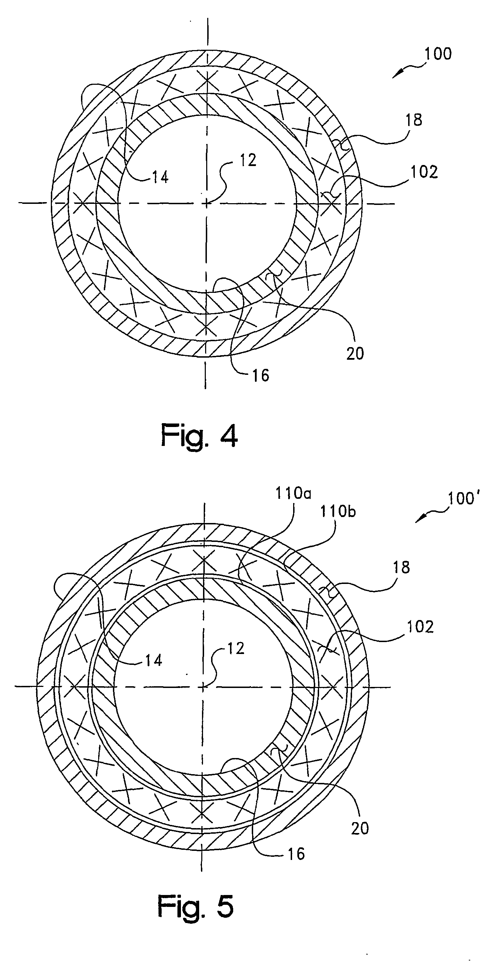

Looking next to Fig. 5, an alternative representative 3-layer tubing construction of member 10 is referenced generally at 100. The construction and materials of the member 100 may be similar to those of the member 10 of Fig. 1, with the exception that the resin of the interlayer 22, now referenced at 102, is reinforced with a filler to obviate the need for the reinforcement layers 30 of Figs. 2 and 3. By so eliminating the layer 30, while maintaining the filled layer 102 as being extrudable, manufacturing equipment requirements and process complexities may be reduced inasmuch as the need and expense for traditional spiral reinforcement braiders, as well as the separate extruders for layers 22a-b, may be eliminated in the manufacture of the construction 100. Such construction, moreover, may allow the surfaces 14 and 16 to be smoother and more uniform, and thereby making the construction 100 particularly adapted for use with push-to-connect type fittings. As before, the wall thicknesses of the outermost and innermost layers 18 and 20 may be relatively thin as having a thickness of between about 5-20 mils (0.13-0.51 mm), with interlayer 102 being relatively thick as having a thickness of between about 10-85 mils (0.25-2.20 mm).

In the construction of tubing 100, the resin component of the composite material of the interlayer 102 generally may form a binder or other continuous or matrix phase into which the filler component may be dispersed as a discrete phase. For most applications, a filler loading of between about 25-95% by weight of volume, based on the total volume or weight, as the case may be, of the material forming the interlayer.

Depending upon the application and/or on the resin component of the material of the interlayer 102, the size and shape of the filler component may or may not be critical. In general, however, the filler may be of any shape, or mixture of shapes, and is referred broadly herein as being "particulate," which should be understood to include solid or hollow spheres and microspheres, elastomeric balloons, flakes, platelets, fibers, rods, irregularly-shaped particles, powders, and especially, fibers, which may be chopped or milled or "whiskers." For many applications, the particle size or distribution of the filler typically will range from between about 0.01-10 mil (0.25-250 µm), which may be a mean average or imputer diameter, length, or other dimension of the particulate. Suitable fiber fillers include glass, carbon, i.e., graphite, polymeric, ceramic, and metallic fibers, and mixtures or other combinations thereof. The filler fibers further may be selected as depending upon one or more of thermal or electrical conductivity, lubricity, resin demand, hardness, chemical compatibility, such as with the resin component, cost, and tensile strength. Indeed, the composite interlayer 102 itself may be replaced with a relatively high tensile strength, which may be extruded or wrapped about the layer 20.

To the extent that the resin component of the material of interlayer 102 is not fusion or otherwise self-bonding to one or both of the layers 18 and 20, either inherently or as modified, a bonding or tie layer may be used between one or both of the layers 18 and 20, and the interlayer 102. As shown in Fig. 5, wherein tubing member 100 reappears at 100', a 5 or more layer construction may be envisioned as including tie layers 110a-b. In the construction 100', the tie layers 110a-b are shown to be relatively thin, e.g., about 5 mils or less, but may be of any relative thickness as co- or sequentially extruded with the layers 18 and 20. Each of the tie layers 110a-b, which, depending upon the respective composition of the layers 18 and 20, may be formed of the same or different material, in general will be thermoplastic or otherwise melt-processible, and specifically will be formulated to be compatible chemically with both the resin of the corresponding layer 18 or 20, and the resin of the interlayer 102 such that a thermal fusion or other bond may be achieved therebetween to thereby consolidate the tubing 100' into an integral structure. The use of tie layers in the bonding of multi-layer tubing constructions is described further in U.S. Pat. Nos. 6,066,377; 6,041,826; 6,039,085; 6,012,496; 5,996,642; 5,937,911; 5,891,373; 5,884,672; 5,884,671; 5,865,218; 5,743,304; 5,716,684; 5,678,611; 5,570,711; 5,566,720; 5,524,673; 5,507,320; 5,500,263; 5,480,271; 5,469,892; 5,460,771; 5,419,374, 5,383,087; 5,284,184; 5,219,003; 5,167,259; 5,167,259; 5,112,692; 5,112,692; 5,093,166; 5,076,329; 5,076,329; 5,038,833; 5,038,833; 4,706,713; 4,627,844; and 3,561,493, in German Pat. Publ. Nos. DE 4001126; 3942354; and 3921723; and 3821723, in Japanese Pat. Publ. Nos. JP 61171982; 4224939; and 140585, in Europe Pat. Publ. Nos. EP 1002980 and 551094, in International (PCT) Publ. Nos. WO 99/41538; 99/41073; 97/44186; and 93/21466, and in U.K. Pat. Publ. No. GB 2204376.

Thus, multi-layer tubular polymeric composites, and articles such as hose and tubing constructed thereof, have been described.

The Examples to follow, wherein all percentages and proportions are by weight unless otherwise expressly indicated, are illustrative of the practicing of the invention herein involved, but should not be construed in any limiting sense.

### EXAMPLES

### EXAMPLE 1

A co-extruded 5-layer composite (See Fig. 2) nylon-polyurethane tube (3/8-inch (9.5 mm) O.D.) of about 50% polyurethane by total weight was constructed in accordance with the present invention as having a 0.015 mil (0.38 mm) thick interlayer of a nylon 11 (ATOFINA BESNOP40TLM) bonded directly to a 0.016 mil (0.43 mm) thick inner layer and a 0.016 mil (0.43 mm) thick outer layer of a 52 Shore D polyurethane (Noveon). Such tube was observed to meet SAE J844 (June 1998) specifications for leak (Para. 9.1(6)), moisture absorption (Para. 9.2(5)), UV resistance (Para. 9.3(5)), cold temperature flexibility (Para. 9.4(5)), heat aging (Para. 9.5(5)), resistance to zinc chloride (Para. 9.6(5)) and methyl alcohol (Para. 9.7(5)), stiffness (Para. 9.8(5)), boiling water stabilization and burst (Para. 9.9(5)), room temperature burst (Para. 9.10(6)), cold temperature impact (Para. 9.11(6)), and collapse resistance (Para. 9.14(5)) testing.

As it is anticipated that certain changes may be made in the present invention without departing from the precepts herein involved, it is intended that all matter contained in the foregoing description shall be interpreted as illustrative and not in a limiting sense. All references including any priority documents cited herein are expressly incorporated by reference.

## Claims

1. A tubular polymeric composite member (10) comprising an innermost layer (20) comprising a first thermoplastic polymeric material; an outermost layer (18) comprising a second thermoplastic polymeric material the same as or different from the first thermoplastic material; and at least one interlayer (22) between the innermost (20) and the outermost (18) layer, wherein each of the innermost (20) and outermost (18) layers is bonded directly to one of the interlayers (22), and wherein each of the first and the second thermoplastic polymeric material is selected, independently, from the group consisting of polyamides and copolymers and blends thereof, the member being **characterized in that**:
the interlayer (22) comprises a third thermoplastic polymeric material different from the first and the second thermoplastic material and selected from the group consisting of: (i) polyurethanes, polyurethane copolymers, and blends thereof; and (ii) polyesters, copolyesters, and copolymers and blends thereof, and
each of the innermost layer (20), outermost layer (18), and interlayer (22) having a thickness, the thickness of the interlayer (22) being thicker than the thicknesses of the innermost (20) and outermost (18) layers.

2. The composite member (10) of claim 1 wherein each of the first and the second thermoplastic polymeric material is selected, independently, from the group consisting of nylons and copolymers and blends thereof.

3. The composite member (10) of claim 1 wherein each of the first and the second thermoplastic polymeric material is selected, independently, from the group consisting of nylon 11 and nylon 12, and copolymers and blends thereof.

4. The composite member (10) of claim 2 or 3 wherein the first and the second thermoplastic polymeric material are the same.

5. The composite member (10) of claim 4 wherein the third thermoplastic material comprising each of the interlayers (22) is the same.

6. The composite member (10) of claim 5 wherein the third thermoplastic material comprising each of the interlayers (22) has a durometer of between about 80 Shore A and 75 Shore D.

7. The composite member (10) of claim 1 wherein the third thermoplastic material comprises:
(a) a polyester or copolyester, or a copolymer or blend thereof; and
(b) a functionalized thermoplastic adhesive resin.

8. The composite member (10) of claim 7 wherein the third thermoplastic material comprises by weight, based on the total weight of (a) and (b), between about 75-95% of (a) and between about 5-25% of (b).

9. The composite member (10) of claim 7 wherein (b) comprises an anhydride-modified polyethylene.

10. The composite member (10) of claim 7 wherein (a) comprises a copolyester elastomer.

11. The composite member(10) of claim 7 wherein each of the innermost (20) and outermost (18) layers is chemically bonded to said one of the interlayers (22).

12. The composite member (10) of claim 1 wherein the third thermoplastic material comprises a copolyester elastomer.

13. The composite member (10) of claim 1 wherein:
each interlayer (22) has a thickness, independently, of between about 10-85 mils (0.25-2.15 mm); and
each of the innermost (20) and the outermost (18) layer has a thickness, independently, of between about 5-20 mils (0.13-0.51 mm).

14. The composite member (10') of claim 1 wherein the member (10) comprises a first said interlayer (22a) having an outer surface (34a) and a inner surface (32a) bonded directly to the innermost layer (20), and a second said interlayer (22b) having a outer surface (34b) bonded directly to the outermost layer (18) and an inner surface (32b), and wherein the member (10) further comprises a reinforcement layer (30) interposed between the outer surface (34a) of the first interlayer (22a) and the inner surface (32b) of the second interlayer (22b).

15. The composite member (10') of claim 14 wherein the third thermoplastic material comprising the first (22a) and the second (22b) interlayer is the same.

16. The composite member (10') of claim 14 wherein the reinforcement layer (30) comprises one or more filaments (42) of one or more fibers.

17. The composite member (10') of claim 16 wherein the reinforcement layer (30) is braided, wound, woven, or knitted of the one or more filaments (42) of the one or more fibers.

18. The composite member (10') of claim 16 wherein the one or more fibers are selected from the group consisting of nylon fibers, polyester fibers, aramid fibers, polyvinyl alcohol fibers, polyvinyl acetate fibers, polyolefin fibers, polyphenylene bezobisoxazole fibers, metal wires, and blends thereof.

19. The composite member (10') of claim 16 wherein the reinforcement layer (30) has interstices (40) between the filaments (42) of the fibers and wherein the first interlayer (22a) is bonded to the second interlayer (22b) through the interstices (40).

20. The composite member (10) of claim 1 wherein each of the innermost (20) and outermost (18) layers is chemically bonded to said one of the interlayers (22).

21. The composite member (10") of claim 1 wherein the member (10") comprises a first said interlayer (22a) having an outer surface (34a) and a inner surface (32b) bonded to the innermost layer (20), and a second said interlayer (22b) having a outer surface (34b) bonded to the outermost layer (18) and an inner surface (32b), and wherein the member further comprises:
a first interior layer (50a) comprising a fourth thermoplastic polymeric material the same as or different from the first and the second thermoplastic polymeric material, the first interior layer (50a) having an inner surface (52a) bonded to the outer surface (34a) of the first interlayer (22a), and an outer surface (54a);
a second interior layer (50b) comprising a fifth thermoplastic material the same as or different from the first and the second polymeric material, and the same as or different from the fourth polymeric material, the second interior layer (50b) having an outer surface (54b) bonded to the inner surface (32b) of the second interlayer (22b) and an inner surface(52b); and
a reinforcement layer (30) interposed between the outer surface (54a) of the first interior layer (50a) and the inner surface (52b) of the second interior layer (50b).

22. The composite member (10") of claim 21 wherein the reinforcement layer (30) comprises one or more filaments of one or more fibers.

23. The composite member (10") of claim 22 wherein the reinforcement layer is braided, wound, woven, or knitted of the one or more filaments (42) of the one or more fibers.

24. The composite member (10") of claim 22 wherein the one or more fibers are selected from the group consisting of nylon fibers, polyester fibers, aramid fibers, polyvinyl alcohol fibers, polyvinyl acetate fibers, polyolefin fibers, polyphenylene bezobisoxazole fibers, metal wires, and blends thereof.

25. The composite member (10") of claim 22 wherein the reinforcement layer (30) has interstices (44) between the filaments (42) of the fibers and wherein the first interior layer (50a) is bonded to the second interior layer (50b) through the interstices.

26. The composite member (10") of claim 21 wherein each of the first, second, fourth, and fifth thermoplastic polymeric material is selected, independently, from the group consisting of nylons and copolymers and blends thereof.

27. The composite member (10") of claim 26 wherein each of the first, second, fourth, and fifth thermoplastic polymeric material is selected, independently, from the group consisting of nylon 11 and nylon 12, and copolymers and blends thereof.

28. The composite member (10") of claim 21 wherein the third thermoplastic material comprising the first (22a) and the second (22b) interlayer is the same.

29. The composite member (10") of claims 21, 26, 27, or 28 wherein the first, second, fourth, and fifth thermoplastic polymeric material are the same.

30. The composite member (10) of claim 1 wherein the third thermoplastic material comprises a polyurethane, or a copolymer or blend thereof.

31. The composite member (10) of claim 30 wherein the third thermoplastic material has a durometer of between about 63 Shore D and 83 Shore D.

32. The composite member (10) of claim 30 wherein the third thermoplastic material has a durometer of between about 70 Shore D and 75 Shore D.

33. The composite member (10) of claim 30 wherein the third thermoplastic material comprises a crystallization retarding component.

34. The composite member (10) of claim 33 wherein the crystallization retarding component is a diol which is branched, substituted, or heteroatom-containing.

35. The composite (10) member of claim 30 wherein the third thermoplastic material has a hard segment content of at least about 20%.

36. A tubular polymeric composite member (10) comprising a first layer (18, 20) comprising a first thermoplastic selected from the group consisting of polyamides, and copolymers and blends thereof; and a second layer (22) bonded directly to the first layer (18, 20), the member (10) being **characterized in that**:
the second layer (22) comprises a second thermoplastic polymeric selected from the group consisting of polyurethanes, and copolymers and blends thereof,
wherein the second thermoplastic material has a durometer of between about 63 Shore D and 83 Shore D, and
wherein the first layer (18, 20) and the second layer (22) each has a thickness, the thickness of second layer (22) being thicker than the thicknesses of the first layer (18, 20).

37. The composite member (10) of claim 36 wherein the second thermoplastic material has a durometer of between about 70 Shore D and 75 Shore D.

38. The composite member (10) of claim 36 wherein the third thermoplastic material comprises a crystallization retarding component.

39. The composite member (10) of claim 38 wherein the crystallization retarding component is a diol which is branched, substituted, or heteroatom-containing.

40. The composite member (10) of claim 36 wherein the third thermoplastic material has a hard segment content of at least about 20%.

41. A tubular polymeric composite member (100) comprising a first layer (18, 20) comprising a first thermoplastic selected from the group consisting of polyamides, and copolymers and blends thereof; and a reinforcement layer (102), the member being **characterized in that**:
the reinforcement layer (102) comprising comprises a material selected from the group consisting of: (i) a blend of a second thermoplastic material different from the first material, and a fiber component; and (ii) high tensile strength polymers; and
first layer (18, 20) and reinforcement layer (102) each has a thickness, the thickness of the reinforcement layer (102) being thicker than the thicknesses of the first layer (18, 20).

42. The composite member (100) of claim 41 wherein the reinforcement layer (102) comprises a blend of a second thermoplastic material and a fiber component, the fiber component being selected from the group consisting of glass, carbon, polymeric, ceramic, and metallic fibers, and combinations thereof.

43. The composite member (100) of claim 42 wherein the fiber component has a mean average length of between about 0.01-10 mil (0.25-250 µm).

## Patentansprüche

1. Röhrenförmiges polymeres Verbundelement (10), umfassend eine innerste Lage (20), die ein erstes thermoplastisches Polymermaterial umfasst; eine äußerste Lage (18), die ein zweites thermoplastisches Polymermaterial umfasst, das mit dem ersten thermoplastischen Material identisch ist oder sich von diesem unterscheidet; und mindestens eine Zwischenlage (22) zwischen der innersten (20) und der äußersten (18) Lage, wobei die innerste (20) und die äußerste (18) Lage jeweils direkt mit einer der Zwischenlagen (22) verbunden sind und wobei das erste und das zweite thermoplastische Polymermaterial jeweils unabhängig voneinander aus der Gruppe bestehend aus Polyamiden und Copolymeren und Mischungen davon ausgewählt sind, wobei das Element **dadurch gekennzeichnet ist, dass**:
die Zwischenlage (22) ein drittes thermoplastisches Polymermaterial umfasst, das sich von dem ersten und dem zweiten thermoplastischen Material unterscheidet und aus der Gruppe bestehend aus: (i) Polyurethanen, Polyurethan-Copolymeren und Mischungen davon; und (ii) Polyestern, Copolyestern und Copolymeren und Mischungen davon ausgewählt ist, und
die innerste Lage (20), die äußerste Lage (18) und die Zwischenlage (22) jeweils eine Dicke aufweisen, wobei die Dicke der Zwischenlage (22) dicker als die Dicken der innersten (20) und der äußersten (18) Lage ist.

2. Verbundelement (10) nach Anspruch 1, wobei das erste und das zweite thermoplastische Polymermaterial jeweils unabhängig voneinander aus der Gruppe bestehend aus Nylonen und Copolymeren und Mischungen davon ausgewählt sind.

3. Verbundelement (10) nach Anspruch 1, wobei das erste und das zweite thermoplastische Polymermaterial jeweils unabhängig voneinander aus der Gruppe bestehend aus Nylon. 11 und Nylon 12 und Copolymeren und Mischungen davon ausgewählt sind.

4. Verbundelement (10) nach Anspruch 2 oder 3, wobei das erste und das zweite thermoplastische Polymermaterial identisch sind.

5. Verbundelement (10) nach Anspruch 4, wobei das dritte thermoplastische Material, das jede der Zwischenlagen (22) umfasst, dasselbe ist.

6. Verbundelement (10) nach Anspruch 5, wobei das dritte thermoplastische Material, das jede der Zwischenlagen (22) umfasst, einen Härtemesswert von zwischen etwa 80 Shore A und 75 Shore D aufweist.

7. Verbundelement (10) nach Anspruch 1, wobei das dritte thermoplastische Material Folgendes umfasst:
(a) einen Polyester oder Copolyester oder ein Copolymer oder eine Mischung davon und
(b) ein funktionalisiertes thermoplastisches Klebeharz.

8. Verbundelement (10) nach Anspruch 7, wobei das dritte thermoplastische Material, bezogen auf das Gesamtgewicht von (a) und (b), zwischen etwa 75 - 95 Gew.-% von (a) und zwischen etwa 5-25 Gew.-% von (b) umfasst.

9. Verbundelement (10) nach Anspruch 7, wobei (b) ein anhydridmodifiziertes Polyethylen umfasst.

10. Verbundelement (10) nach Anspruch 7, wobei (a) ein Copolyester-Elastomer umfasst.

11. Verbundelement (10) nach Anspruch 7, wobei die innerste (20) und die äußerste (18) Lage jeweils chemisch mit einer der Zwischenlagen (22) verbunden sind.

12. Verbundelement (10) nach Anspruch 1, wobei das dritte thermoplastische Material ein Copolyester-Elastomer umfasst.

13. Verbundelement (10) nach Anspruch 1, wobei:
jede Zwischenlage (22) unabhängig voneinander eine Dicke von zwischen etwa 10 - 85 mil (0,25 - 2,15 mm) aufweist und
die innerste (20) und die äußerste (18) Lage jeweils unabhängig voneinander eine Dicke von zwischen etwa 5 - 20 mil (0,13 - 0,51 mm) aufweisen.

14. Verbundelement (10') nach Anspruch 1, wobei das Element (10') eine erste besagte Zwischenlage (22a) mit einer äußeren Oberfläche (34a) und einer inneren Oberfläche (32a), die direkt mit der innersten Lage (20) verbunden ist, und eine zweite besagte Zwischenlage (22b) mit einer äußeren Oberfläche (34b), die direkt mit der äußersten Lage (18) verbunden ist, und einer inneren Oberfläche (32b) aufweist und wobei das Element (10') weiterhin eine Verstärkungslage (30) umfasst, die zwischen der äußeren Oberfläche (34a) der ersten Zwischenlage (22a) und der inneren Oberfläche (32b) der zweiten Zwischenlage (22b) angeordnet ist.

15. Verbundelement (10') nach Anspruch 14, wobei das dritte thermoplastische Material, das die erste (22a) und die zweite (22b) Zwischenlage umfasst, dasselbe ist.

16. Verbundelement (10') nach Anspruch 14, wobei die Verstärkungslage (30) ein oder mehrere Filamente (42) aus einer oder mehreren Fasern umfasst.

17. Verbundelement (10') nach Anspruch 16, wobei die Verstärkungslage (30) aus dem einen oder den mehreren Filamenten (42) aus der einen oder den mehreren Fasern geflochten, gewickelt, gewebt oder gewirkt ist.

18. Verbundelement (10') nach Anspruch 16, wobei die eine oder die mehreren Fasern aus der Gruppe bestehend aus Nylonfasern, Polyesterfasern, Aramidfasern, Polyvinylalkoholfasern, Polyvinylacetatfasern, Polyolefinfasern, Polyphenylenbenzobisoxazolfasern, Metalldrähten und Gemischen davon ausgewählt sind.

19. Verbundelement (10') nach Anspruch 16, wobei die Verstärkungslage (30) Zwischenräume (40) zwischen den Filamenten (42) aus den Fasern aufweist und wobei die erste Zwischenlage (22a) durch die Zwischenräume (40) mit der zweiten Zwischenlage (22b) verbunden ist.

20. Verbundelement (10) nach Anspruch 1, wobei die innerste (20) und die äußerste (18) Lage jeweils chemisch mit einer der Zwischenlagen (22) verbunden sind.

21. Verbundelement (10") nach Anspruch 1, wobei das Element (10") eine erste besagte Zwischenlage (22a) mit einer äußeren Oberfläche (34a) und einer inneren Oberfläche (32a), die mit der innersten Lage (20) verbunden ist, und eine zweite besagte Zwischenlage (22b) mit einer äußeren Oberfläche (34b), die mit der äußersten Lage (18) verbunden ist, und einer inneren Oberfläche (32b) umfasst und wobei das Element weiterhin Folgendes umfasst:
eine erste innere Lage (50a), die ein viertes thermoplastisches Polymermaterial umfasst, das mit dem ersten und dem zweiten thermoplastischen Polymermaterial identisch ist oder sich von diesem unterscheidet, wobei die erste innere Lage (50a) eine innere Oberfläche (52a), die mit der äußeren Oberfläche (34a) der ersten Zwischenlage (22a) verbunden ist, und eine äußere Oberfläche (54a) aufweist;
eine zweite innere Lage (50b), die ein fünftes thermoplastisches Material umfasst, das mit dem ersten und dem zweiten Polymermaterial identisch ist oder sich von diesem unterscheidet und mit dem vierten Polymermaterial identisch ist oder sich von diesem unterscheidet, wobei die zweite innere Lage (50b) eine äußere Oberfläche (54b), die mit der inneren Oberfläche (32b) der zweiten Zwischenlage (22b) verbunden ist, und eine innere Oberfläche (52b) aufweist; und
eine Verstärkungslage (30), die zwischen der äußeren Oberfläche (54a) der ersten inneren Lage (50a) und der inneren Oberfläche (52b) der zweiten inneren Lage (50b) angeordnet ist.

22. Verbundelement (10") nach Anspruch 21, wobei die Verstärkungslage (30) ein oder mehrere Filamente aus einer oder mehreren Fasern umfasst.

23. Verbundelement (10") nach Anspruch 22, wobei die Verstärkungslage aus dem einen oder den mehreren Filamenten (42) aus der einen oder den mehreren Fasern geflochten, gewickelt, gewebt oder gewirkt ist.

24. Verbundelement (10") nach Anspruch 22, wobei die eine oder die mehreren Fasern aus der Gruppe bestehend aus Nylonfasern, Polyesterfasern, Aramidfasern, Polyvinylalkoholfasern, Polyvinylacetatfasern, Polyolefinfasern, Polyphenylenbenzobisoxazolfasern, Metalldrähten und Gemischen davon ausgewählt sind.

25. Verbundelement (10") nach Anspruch 22, wobei die Verstärkungslage (30) Zwischenräume (40) zwischen den Filamenten (42) aus den Fasern aufweist und wobei die erste innere Lage (50a) durch die Zwischenräume mit der zweiten inneren Lage (50b) verbunden ist.

26. Verbundelement (10") nach Anspruch 21, wobei das erste, das zweite, das vierte und das fünfte thermoplastische Polymermaterial jeweils unabhängig voneinander aus der Gruppe bestehend aus Nylonen und Copolymeren und Mischungen davon ausgewählt sind.

27. Verbundelement (10") nach Anspruch 26, wobei das erste, das zweite, das vierte und das fünfte thermoplastische Polymermaterial jeweils unabhängig voneinander aus der Gruppe bestehend aus Nylon 11 und Nylon 12 und Copolymeren und Mischungen davon ausgewählt sind.

28. Verbundelement, (10") nach Anspruch 21, wobei das dritte thermoplastische Material, das die erste (22a) und die zweite (22b) Zwischenlage umfasst, dasselbe ist.

29. Verbundelement (10") nach Anspruch 21, 26, 27 oder 28, wobei das erste, das zweite, das vierte und das fünfte thermoplastische Polymermaterial identisch sind.

30. Verbundelement (10) nach Anspruch 1, wobei das dritte thermoplastische Material ein Polyurethan oder ein Copolymer oder eine Mischung davon umfasst.

31. Verbundelement (10) nach Anspruch 30, wobei das dritte thermoplastische Material einen Härtemesswert von zwischen etwa 63 Shore D und 83 Shore D aufweist.

32. Verbundelement (10) nach Anspruch 30, wobei das dritte thermoplastische Material einen Härtemesswert von zwischen etwa 70 Shore D und 75 Shore D aufweist.

33. Verbundelement (10) nach Anspruch 30, wobei das dritte thermoplastische Material eine die Kristallisation verzögernde Komponente aufweist.

34. Verbundelement (10) nach Anspruch 33, wobei die die Kristallisation verzögernde Komponente ein Diol ist, das verzweigt, substituiert oder heteroatomhaltig ist.

35. Verbundelement (10) nach Anspruch 30, wobei das dritte thermoplastische Material einen Gehalt an Hartsegmenten von mindestens etwa 20 % aufweist.

36. Röhrenförmiges polymeres Verbundelement (10), umfassend eine erste Lage (18, 20), die einen ersten thermoplastischen Kunststoff umfasst, der aus der Gruppe bestehend aus Polyamiden und Copolymeren und Mischungen davon ausgewählt ist; und eine zweite Lage (22), die direkt mit der ersten Lage (18, 20) verbunden ist, wobei das Element (10) **dadurch gekennzeichnet ist, dass**:
die zweite Lage (22) ein zweites thermoplastisches Polymer umfasst, das aus der Gruppe bestehend aus Polyurethanen und Copolymeren und Mischungen davon ausgewählt ist,
wobei das zweite thermoplastische Material einen Härtemesswert von zwischen etwa 63 Shore D und 83 Shore D aufweist und
wobei die erste Lage (18, 20) und die zweite Lage (22) jeweils eine Dicke aufweisen, wobei die Dicke der zweiten Lage (22) dicker als die Dicken der ersten Lage (18, 20) ist.

37. Verbundelement (10) nach Anspruch 36, wobei das zweite thermoplastische Material einen Härtemesswert von zwischen etwa 70 Shore D und 75 Shore D aufweist.

38. Verbundelement (10) nach Anspruch 36, wobei das dritte thermoplastische Material eine die Kristallisation verzögernde Komponente aufweist.

39. Verbundelement (10) nach Anspruch 38, wobei die die Kristallisation verzögernde Komponente ein Diol ist, das verzweigt, substituiert oder heteroatomhaltig ist.

40. Verbundelement (10) nach Anspruch 36, wobei das dritte thermoplastische Material einen Gehalt an Hartsegmenten von mindestens etwa 20 % aufweist.

41. Röhrenförmiges polymeres Verbundelement (100), umfassend eine erste Lage (18, 20), die einen ersten thermoplastischen Kunststoff umfasst, der aus der Gruppe bestehend aus Polyamiden und Copolymeren und Mischungen davon ausgewählt ist; und eine Verstärkungslage (102), wobei das Element **dadurch gekennzeichnet ist, dass**:
die Verstärkungslage (102) ein Material umfasst, das aus der Gruppe bestehend aus: (i) einer Mischung aus einem zweiten thermoplastischen Material, das sich von dem ersten Material unterscheidet, und einer Faserkomponente und (ii) Polymeren mit hoher Zugfestigkeit ausgewählt ist; und
die erste Lage (18, 20) und die Verstärkungslage (102) jeweils eine Dicke aufweisen, wobei die Dicke der Verstärkungslage (102) dicker als die Dicken der ersten Lage (18, 20) ist.

42. Verbundelement (100) nach Anspruch 41, wobei die Verstärkungslage (102) eine Mischung aus einem zweiten thermoplastischen Material und einer Faserkomponente umfasst, wobei die Faserkomponente aus der Gruppe bestehend aus Glas-, Kohlenstoff-, Polymer-, Keramik- und Metallfasern und Kombinationen davon ausgewählt ist.

43. Verbundelement (100) nach Anspruch 42, wobei die Faserkomponente eine mittlere durchschnittliche Länge von zwischen etwa 0,01 - 10 mil (0,25 - 250 µm) aufweist.

## Revendications

1. Elément composite tubulaire de polymère (10) comprenant une couche (20) la plus interne comprenant un premier matériau de polymère thermoplastique, une couche (18) la plus externe comprenant un second matériau de polymère thermoplastique identique ou différent du premier matériau thermoplastique, et au moins une couche intermédiaire (22) entre la couche (20) la plus interne et la couche (18) la plus externe, dans lequel chacune des couches la plus interne (20) et la plus externe (18) est directement liée à une des couches intermédiaires (22), et dans lequel chacun des premier et second matériaux de polymère thermoplastique est sélectionné, de façon indépendante, dans le groupe constitué par les polyamides et les copolymères et les mélanges de ces derniers, élément
**caractérisé en ce que** :
- la couche intermédiaire (22) comprend un troisième matériau de polymère thermoplastique différent des premier et second matériaux thermoplastiques et sélectionné dans le groupe constitué par : (i) les polyuréthannes, les copolymères de polyuréthanne et leurs mélanges, et (ii) les polyesters, les copolyesters et leurs copolymères et mélanges ; et
- chacune parmi la couche la plus interne (20), la couche la plus externe (18) et la couche intermédiaire (22) possède une certaine épaisseur, l'épaisseur de la couche intermédiaire (22) étant plus importante que les épaisseurs des couches la plus interne (20) et la plus externe (18).

2. Elément composite (10) selon la revendication 1, dans lequel chacun des premier et second matériaux de polymère thermoplastique est sélectionné, de façon indépendante, dans le groupe constitué par les Nylons et les copolymères et les mélanges de ces derniers.

3. Elément composite (10) selon la revendication 1, dans lequel chacun des premier et second matériaux de polymère thermoplastique est choisi, de façon indépendante, dans le groupe constitué par le Nylon 11 et le Nylon 12, et les copolymères et les mélanges de ces derniers.

4. Elément composite (10) selon la revendication 2 ou 3, dans lequel les premier et second matériaux de polymère thermoplastique sont les mêmes.

5. Elément composite (10) selon la revendication 4, dans lequel le troisième matériau thermoplastique constituant chacune des couches intermédiaires (22) est le même.

6. Elément composite (10) selon la revendication 5, dans lequel le troisième matériau thermoplastique comprenant chacune des couches intermédiaires (22) possède une dureté entre environ 80 Shore A et 75 Shore D.

7. Elément composite (10) selon la revendication 1, dans lequel le troisième matériau thermoplastique comprend :
a) un polyester ou copolyester, ou un copolymère ou un mélange de ce dernier ; et
b) une résine adhésive thermoplastique fonctionnalisée.

8. Elément composite (10) selon la revendication 7, dans lequel le troisième matériau thermoplastique comprend en poids, sur la base du poids total de a) et b), entre environ 75 et 95% de a) et entre environ 5 et 25% de b).

9. Elément composite (10) selon la revendication 7, dans lequel b) comprend un polyéthylène modifié par un anhydride.

10. Elément composite (10) selon la revendication 7, dans lequel a) comprend un élastomère de copolyester.

11. Elément composite (10) selon la revendication 7, dans lequel chacune des couches la plus interne (20) et la plus externe (18) est liée, de façon chimique, à unedite couche intermédiaire (22).

12. Elément composite (10) selon la revendication 1, dans lequel le troisième matériau thermoplastique comprend un élastomère de copolyester.

13. Elément composite (10) selon la revendication 1, dans lequel :
- chaque couche intermédiaire (22) possède une épaisseur, de façon indépendante, comprise entre environ 10 et 85 mils (0,25 et 2,15 mm) ; et
- chacune des couches la plus interne (20) et la plus externe (18) possède une épaisseur, de façon indépendante, comprise entre environ 5 et 20 mils (0,13 et 0,51 mm).

14. Elément composite (10') selon la revendication 1, dans lequel l'élément (10) comprend une première dite couche intermédiaire (22a) possédant une surface externe (34a) et une surface interne (32a) directement liée à la couche la plus interne (20), et une seconde dite couche intermédiaire (22b) possédant une surface externe (34b) directement liée à la couche la plus externe (18) et une surface interne (32b), et dans lequel l'élément (10) comprend, de plus, une couche de renforcement (30) interposée entre la surface externe (34a) de la première couche intermédiaire (22a) et la surface interne (32b) de la seconde couche intermédiaire (22b).

15. Elément composite (10') selon la revendication 14, dans lequel le troisième matériau thermoplastique constituant la première (22a) et la seconde (22b) couche intermédiaire est le même.

16. Elément composite (10') selon la revendication 14, dans lequel la couche de renforcement (30) comprend un ou plusieurs filaments (42) d'une ou plusieurs fibres.

17. Elément composite (10') selon la revendication 16, dans lequel la couche de renforcement (30) est tressée, enroulée, tissée ou tricotée à l'aide d'un ou plusieurs filaments (42) de la ou des fibres.

18. Elément composite (10') selon la revendication 16, dans lequel la ou les fibres sont choisies dans le groupe constitué par les fibres de Nylon, les fibres de polyester, les fibres d'aramide, les fibres d'alcool de polyvinyle, les fibres d'acétate de polyvinyle, les fibres de polyoléfine, les fibres de polyphénylène-bezobisoxazole, les fils de métal et leurs mélanges.

19. Elément composite (10') selon la revendication 16, dans lequel la couche de renforcement (30) possède des interstices (40) séparant les filaments (42) des fibres et dans lequel la première couche intermédiaire (22a) est liée à la seconde couche intermédiaire (22b) via les interstices (40).

20. Elément composite (10) selon la revendication 1, dans lequel chacune des couches la plus interne (20) et la plus externe (18) est liée, de façon chimique, à unedite couche intermédiaire (22).

21. Elément composite (10") selon la revendication 1, dans lequel l'élément (10") comprend une première dite couche intermédiaire (22a) possédant une surface externe (34) et une surface interne (32b) liée à la couche la plus interne (20), et une seconde dite couche intermédiaire (22b) possédant une surface externe (34b) liée à la couche la plus externe (18) et une surface interne (32b), et dans lequel l'élément comprend, de plus :
- une première couche intérieure (50a) comprenant un quatrième matériau de polymère thermoplastique identique ou différent du premier et du second matériau de polymère thermoplastique, la première couche intérieure (50a) possédant une surface interne (52a) liée à la surface externe (34a) de la première couche intermédiaire (22a), et une surface externe (54a) ;
- une seconde couche intérieure (50b) comprenant un cinquième matériau thermoplastique identique ou différent du premier et du second matériau de polymère, et identique ou différent du quatrième matériau de polymère, la seconde couche intérieure (50b) possédant une surface externe (54b) liée à la surface interne (32b) de la seconde couche intermédiaire (22b) et une surface interne (52b) ; et
- une couche de renforcement (30) interposée entre la surface externe (54a) de la première couche intérieure (50a) et la surface interne (52b) de la seconde couche intérieure (50b).

22. Elément composite (10") selon la revendication 21, dans lequel la couche de renforcement (30) comprend un ou plusieurs filaments d'une ou plusieurs fibres.

23. Elément composite (10") selon la revendication 22, dans lequel la couche de renforcement est tressée, enroulée, tissée ou tricotée à l'aide d'un ou plusieurs filaments (42) de la ou des fibres.

24. Elément composite (10") selon la revendication 22, dans lequel la ou les fibres sont choisies dans le groupe constitué par les fibres de Nylon, les fibres de polyester, les fibres d'aramide, les fibres d'alcool de polyvinyle, les fibres d'acétate de polyvinyle, les fibres de polyoléfine, les fibres de polyphénylène-bezobisoxazole, les fils de métal, et leurs mélanges.

25. Elément composite (10") selon la revendication 22, dans lequel la couche de renforcement (30) possède des interstices (44) séparant les filaments (42) des fibres et dans lequel la première couche intérieure (50a) est liée à la seconde couche intérieure (50b) par l'intermédiaire des interstices.

26. Elément composite (10") selon la revendication 21, dans lequel chacun des premier, second, quatrième et cinquième matériaux de polymère thermoplastique est sélectionné de façon indépendante dans le groupe constitué par les Nylons, et les copolymères et les mélanges de ces derniers.

27. Elément composite (10") selon la revendication 26, dans lequel chacun des premier, second, quatrième et cinquième matériaux de polymère thermoplastique est sélectionné, de façon indépendante, dans le groupe constitué par le Nylon 11 et le Nylon 12, et les copolymères et les mélanges de ces derniers.

28. Elément composite (10") selon la revendication 21, dans lequel le troisième matériau thermoplastique constituant la première (22a) et la seconde (22b) couche intermédiaire est le même.

29. Elément composite (10") selon les revendications 21, 26, 27 ou 28, dans lequel les premier, second, quatrième et cinquième matériaux de polymère thermoplastique sont les mêmes.

30. Elément composite (10) selon la revendication 1, dans lequel le troisième matériau thermoplastique comprend un polyuréthanne, ou un copolymère ou leur mélange.

31. Elément composite (10) selon la revendication 30, dans lequel le troisième matériau thermoplastique possède une dureté comprise entre environ 63 Shore D et 83 Shore D.

32. Elément composite (10) selon la revendication 30, dans lequel le troisième matériau thermoplastique possède une dureté comprise entre environ 70 Shore D et 75 Shore D.

33. Elément composite (10) selon la revendication 30, dans lequel le troisième matériau thermoplastique comprend un composant de retard de cristallisation.

34. Elément composite (10) selon la revendication 33, dans lequel le composant de retard de cristallisation est un diol qui est ramifié, substitué ou contient un hétéroatome.

35. Elément composite (10) selon la revendication 30, dans lequel le troisième matériau thermoplastique possède une proportion de segment dur d'au moins environ 20%.

36. Elément composite tubulaire en polymère (10) comprenant une première couche (18, 20) comprenant un premier matériau thermoplastique sélectionné dans le groupe constitué par les polyamides, et les copolymères et les mélanges de ces derniers, et une seconde couche (22) directement liée à la première couche (18, 20), élément (10) **caractérisé en ce que** :
- la seconde couche (22) comprend un second matériau de polymère thermoplastique sélectionné dans le groupe constitué par les polyuréthannes, et les copolymères et les mélanges de ces derniers ;
dans lequel le second matériau thermoplastique possède une dureté comprise entre environ 63 Shore D et 83 Shore D ; et
dans lequel la première couche (18, 20) et la seconde couche (22) ont chacune une certaine épaisseur, l'épaisseur de la seconde couche (22) étant plus importante que les épaisseurs de la première couche (18, 20).

37. Elément composite (10) selon la revendication 36, dans lequel le second matériau thermoplastique possède une dureté comprise entre environ 70 Shore D et 75 Shore D.

38. Elément composite (10) selon la revendication 36, dans lequel le troisième matériau thermoplastique comprend un composant de retard de cristallisation.

39. Elément composite (10) selon la revendication 38, dans lequel le composant de retard de cristallisation est un diol qui est ramifié, substitué ou contient un hétéroatome.

40. Elément composite (10) selon la revendication 36, dans lequel le troisième matériau thermoplastique possède une proportion de segment dur d'au moins environ 20%.

41. Elément composite tubulaire en polymère (100) comprenant une première couche (18, 20) comprenant un premier matériau thermoplastique sélectionné dans le groupe constitué par les polyamides, et les copolymères et les mélanges de ces derniers, et une couche de renforcement (102), élément **caractérisé en ce que** :
- la couche de renforcement (102) comprend un matériau sélectionné dans le groupe constitué par : i) un mélange d'un second matériau thermoplastique différent du premier matériau et d'un composant fibreux; et ii) des polymères à grande résistance à la traction ; et
- la première couche (18, 20) et la couche de renforcement (102) possèdent chacune une certaine épaisseur, l'épaisseur de la couche de renforcement (102) étant plus importante que les épaisseurs de la première couche (18, 20).

42. Elément composite (100) selon la revendication 41, dans lequel la couche de renforcement (102) comprend un mélange d'un second matériau thermoplastique et d'un composant fibreux, le composant fibreux étant sélectionné dans le groupe constitué par le verre, le carbone, un polymère, une céramique et des fibres métalliques et leurs combinaisons.

43. Elément composite (100) selon la revendication 42, dans lequel le composant fibreux possède une longueur principale moyenne comprise entre environ 0,01 et 10 mils (0,25 et 250 *µ*m).
